# EUROPÄISCHE PATENTSCHRIFT

(11) **EP 2 016 296 B1**
(45) Veröffentlichungstag und Bekanntmachung des Hinweises auf die Patenterteilung: **30.06.2010**
(21) Anmeldenummer: 07724687.4
(22) Anmeldetag: 27.04.2007
(51) Int. Cl.: F16B 13/06, F16B 13/12

(54) **KUNSTSTOFFDÜBEL MIT SPREIZSCHENKELN**
PLASTIC PLUG WITH EXPANDING LEGS
CHEVILLE EN PLASTIQUE AVEC BRANCHES D'ECARTEMENT

(30) Priorität: 28.04.2006 DE 102006020369
(43) Veröffentlichungstag der Anmeldung: 21.01.2009
(73) Patentinhaber: MEA Befestigungssysteme GmbH, 86551 Aichach (DE)
(72) Erfinder: BERGER, Xaver, 86551 Aichach (DE); SCHÜLKE, Rudolf, 86551 Aichach (DE)
(74) Vertreter: Wolff, Felix
(86) Internationale Anmeldenummer: PCT/EP2007/003760
(87) Internationale Veröffentlichungsnummer: WO 2007/124933

(56) Entgegenhaltungen:
- WO-A-2005/106259
- DE-A1- 2 314 520
- DE-A1- 19 725 719
- DE-C1- 3 208 347

## Beschreibung

Die Erfindung betrifft einen Kunststoffdübel mit zwei Spreizschenkeln, die durch einen Schlitz zwischen den Spreizschenkeln getrennt sind, wobei der Schlitz in zumindest einem Stegbereich unterbrochen ist.

Spreizdübel aus Kunststoff weisen in der Regel zwei Spreizschenkel auf, die durch ein Befestigungsmittels aufgespreizt werden. Um ein Austreten des Befestigungsmittels aus einem Spreizdübel zu vermeiden, können die Spreizschenkel Führungsmittel aufweisen. Aus der Patentschrift DE 29 47 752 C2 ist bekannt, die Führungsmittel als streckbare Stege auszuführen, um das Aufspreizen der Spreizschenkel möglichst nicht zu behindern. Nachteilig ist, dass insbesondere bei Bohrungen in Materialien, die Hohlräume aufweisen, wie beispielsweise Lochsteinen, die Spreizschenkel in solche Hohlräume ausweichen können.

Die Patentschrift DE 19725719 A offenbart einen Kunststoffdübel mit den Merkmalen des Oberbegriffs des Anspruchs 1.

Der Erfindung liegt die Aufgabe zu Grunde, einen Dübel mit verbesserten Auszugswerten, insbesondere aus Bohrungen in Lochsteinen zur Verfügung zu stellen.

Die Aufgabe wird erfindungsgemäß durch einen Dübel der eingangs genannten Art gelöst, wobei der Schlitz einen ersten Teilschlitz und einen zweiten Teilschlitz aufweist, die außerhalb des Stegbereichs im Wesentlichen auf einer gemeinsamen Linie in Längsrichtung verlaufen und wobei der erste Teilschlitz und der zweite Teilschlitz zumindest in einem Teil des Stegbereichs in Längsrichtung überlappen.

Vorteilhafte Ausführungsformen sind in den Unteransprüchen angegeben.

Es war für den Fachmann überaus erstaunlich und nicht vorherzusehen, dass der erfindungsgemäße Stegbereich bei dem Eindringen eines Befestigungsmittels in den Dübel durch die Überlappung der Teilschlitze verwindet und ein Verdrehen der Spreizschenkel des Dübels in der Bohrung dadurch vermindert werden kann. Das Ausweichen der Spreizschenkel in Hohlräume wird durch diese Verdrehsicherung in vorteilhafter Weise unterbunden oder zumindest stark eingeschränkt. Durch die außerhalb des Stegbereichs im Wesentlichen auf einer Linie angeordneten Teilschlitze lassen sich die Spreizschenkel in vorteilhafter Weise gut spreizen. Darüber hinaus bildet der erfindungsgemäße Stegbereich eine Führung für das Befestigungsmittel und verhindert so beispielsweise das seitliche Austreten des Befestigungsmittels aus dem Dübel. Der Fachmann versteht, dass der erfindungsgemäße Kunststoffdübel auch zwei oder mehr erfindungsgemäße Stegbereiche aufweisen kann.

Der erste Teilschlitz und der zweite Teilschlitz sind in dem Stegbereich vorzugsweise im Wesentlichen parallel zueinander angeordnet. Der erste Teilschlitz erstreckt sich dabei bevorzugt von einer Dübelspitze bis zu dem Stegbereich, während der zweite Teilschlitz sich vorzugsweise von dem Stegbereich bis zu einem in Längsrichtung hinteren Bereich der Spreizschenkel erstreckt. Unter der Längsrichtung des Dübels bzw. der Spreizschenkel im Sinne dieser Anmeldung wird die axiale Erstreckungsrichtung des Dübels verstanden, die auch der Richtung des Eindringens des Befestigungsmittels, also beispielsweise einer Schraube oder eines Nagels in eine den Dübel durchdringende Bohrung entspricht. Als vorne oder vorderer Bereich des Dübels wird derjenige Teil des Dübels bezeichnet, der zuerst in die Bohrung eingeführt wird und umfasst somit die Dübelspitze, in der die Spreizschenkel in dem vorderen Bereich vorzugsweise enden. Im hinteren Bereich sind die Spreizschenkel vorzugsweise einstückig mit einer Dübelhülse verbunden, welche eine Aufnahme für das Befestigungsmittel aufweist.

In einer besonders bevorzugten Ausführungsform sind der erste Teilschlitz und der zweite Teilschlitz gegensinnig aus der Längsrichtung abgeknickt und verlaufen innerhalb des Stegbereichs schräg auf dem Umfang des Dübels. Der abgeknickte Teil der Teilschlitze erstreckt sich beispielsweise nur so weit, dass ein gewisser Überlappungsbereich der Teilschlitze gegeben ist, in dem sie im Wesentlichen parallel zueinander angeordnet sind. Der schräge Verlauf der Teilschlitze in dem Stegbereich führt besonders vorteilhaft zu einem Verdrillen der Spreizschenkel, so dass die Haltekräfte durch die Spreizung statt in nur zwei Richtungen zu wirken, besser auf dem Umfang der Bohrung verteilt sind.

In einer weiteren, bevorzugten Ausführungsform, die die Aufgabe ebenfalls löst erstreckt sich zwischen den Spreizschenkeln eine Ausnehmung in Längsrichtung. Im Vergleich zu dem Schlitz ist der Abstand, der durch die Ausnehmung zwischen den Spreizschenkeln entsteht, vorzugsweise größer. Die Ausnehmung erstreckt sich vorzugsweise von der Dübelhülse über den hinteren Bereich bis zu einem vorderen Bereich der Spreizschenkel. Erfindungsgemäß ist die Ausnehmung durch einen Balken in Längsrichtung überbrückt.

Der Balken bietet vorteilhafterweise eine gute Führung für das Befestigungsmittel, so dass dieses nicht durch die Ausnehmung austreten kann. Darüber hinaus wird der erfindungsgemäße Balken beim Aufspreizen der Spreizschenkel bogenförmig nach außen gewölbt und übt somit vorteilhaft eine zusätzliche Haltekraft auf die Bohrung aus. Die Kraft, die durch den bogenförmigen Balken ausgeübt wird, wirkt besonders vorteilhaft in einer Richtung, die um etwa 90° gegenüber der Kraftrichtung der Spreizschenkel versetzt ist. Der Balken bietet daher beispielsweise eine zusätzliche Verdrehsicherung und erhöht die Auszugswerte des erfindungsgemäßen Dübels.

Vorzugsweise ist der Balken mit einen der Spreizschenkel und/oder mit beiden Spreizschenkeln im Bereich mindestens einer Anbindung verbunden, besonders bevorzugt einstückig verbunden. Eine der Anbindungen ist dabei vorzugsweise an einem vorderen Ende des Balkens angeordnet und/oder eine weitere Anbindung an einem hinteren Ende des Balkens. Der Fachmann versteht, dass die vordere und die hintere Anbindung an dem selben oder an verschiedenen Spreizschenkeln befestigt sein können oder auch an beiden. Insbesondere die hintere Anbindung wäre auch im Bereich der Dübelhülse denkbar.

Ferner bevorzugt ist eine dritte Anbindung zwischen dem vorderen und hinteren Ende des Balkens angeordnet, vorzugsweise in Längsrichtung mittig des Balkens, die ebenfalls mit einem oder beiden Spreizschenkein verbunden sein kann. Durch eine mittige Anbindung ergeben sich besonders vorteilhaft zwei Balkenteile, die zwei Bögen ausbilden und die Kraft gegen die Bohrung noch besser verteilen.

In einer weiteren, bevorzugten Ausführungsform ist der Schlitz in einem in Längsrichtung vorderen Bereich und die Ausnehmung in einem in Längsrichtung hinteren Bereich der Spreizschenkel angeordnet ist. besonders bevorzugt sind der Schlitz in dem vorderen Bereich und die Ausnehmung in dem hinteren Bereich miteinander verbunden sind. Die Spreizung der Spreizschenkel wird dadurch vorteilhaft erleichtert.

Die Spreizschenkel weisen in einer ebenfalls bevorzugten Ausführungsform in Längsrichtung aufeinander folgende Vorsprünge und Vertiefungen aufweisen, wobei vorzugsweise alle Vorsprünge eine im Wesentlichen gleiche Höhe aufweisen, während die Vertiefungen nach vorne hin, also in Richtung der Dübelspitze im Wesentlichen kontinuierlich tiefer sind. Die Bohrung zur Aufnahme des Befestigungsmittels in dem Dübel kann beispielsweise entsprechend im Querschnitt nach vorne hin verjüngt sein. Die Aufspreizung wird dadurch im vorderen Bereich des Dübels verstärkt.

Nachfolgend ist ein Ausführungsbeispiel eines erfindungsgemäßen Kunststoffdübels anhand einer Zeichnung näher erläutert. Die Ausführungen sind lediglich beispielhaft und schränken den allgemeinen Erfindungsgedanken nicht ein.

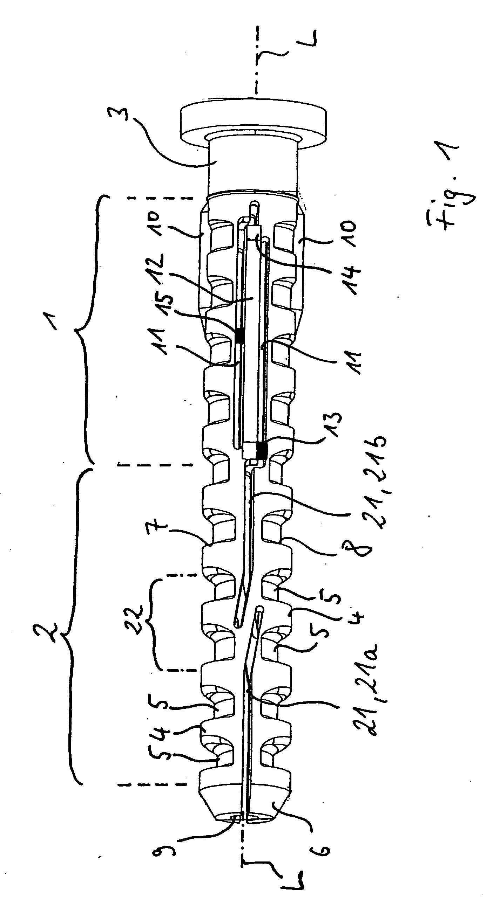

**Figur 1** zeigt den erfindungsgemäßen Kunststoffdübel in einer perspektivischen Ansicht.

In der **Figur 1** ist ein Kunststoffdübel mit zwei Spreizschenkeln 7 und 8 dargestellt. Die Spreizschenkel sind in einem hinteren Bereich 1 einstückig mit einer Dübelhülse 3 verbunden und erstrecken sich bis zu einer Dübelspitze 6. In seiner Längsrichtung L ist der Dübel von einer Bohrung 9 zur Aufnahme eines Befestigungsmittels durchdrungen, die nach vorne hin, also in Richtung Dübelspitze 6 verjüngt sein kann. Die Spreizschenkel 7 und 8 weisen eine Profilierung aus Vorsprüngen 4 und Vertiefungen 5 auf, die sich in Längsrichtung L abwechseln. Die Vorsprünge 4 und Vertiefungen 5 sind nur teilweise beispielhaft mit Bezugszeichen versehen. Es ist erkennbar, dass alle Vorsprünge 4 im Wesentlichen die gleiche Höhe aufweisen, während die Vertiefungen 5 nach vorne hin, also zur Dübelspitze 6 hin kontinuierlich tiefer werden. Im hinteren Bereich 1 sind in Längsrichtung L verlaufende Rippen 10 als Verdrehsicherung angeordnet.

In einem vorderen Bereich 2 sind die Spreizschenkel 7 und 8 durch einen Schlitz 21 getrennt, wobei der Schlitz 21 aus einem ersten Teilschlitz 21 a und einem zweiten Teilschlitz 21b besteht, die in einem Stegbereich 22 in Längsrichtung L überlappen, jedoch nicht miteinander verbunden sind. Der erste Teilschlitz 21 erstreckt sich von der Dübelspitze 6 bis zum Stegbereich 22. In dem dargestellten Ausführungsbeispiel ist die auch Dübelspitze 6 durch den Schlitz 21 zweigeteilt. Diese könnte statt dessen auch einteilig sein. Der zweite Teilschlitz 21 b erstreckt sich von dem Stegbereich 22 bis zu einer Ausnehmung 11, auf die später näher eingegangen wird.

Außerhalb des Stegbereichs 22 verlaufen die Teilschlitze 21 a und 21 b im Wesentlichen geradlinig in Längsrichtung L und im Wesentlichen auf einer Linie. In dem Stegbereich 22 knicken die Teilschlitze 21a und 21b gegensinnig jeweils unter einem stumpfen Winkel aus der Längsrichtung ab. Sie verlaufen nach dem Knick im Wesentlichen parallel zueinander schräg auf dem Umfang des Dübels bis über die Mitte des Stegbereichs 22 hinaus. Dadurch überlappen die Teilschlitze 21a und 21b in Längsrichtung. Der Fachmann versteht, dass der Schlitz 21 auch durch zwei oder mehr erfindungsgemäße Stegbereiche 22 unterbrochen sein könnte und dass der Schlitz 21 nicht auf den vorderen Bereich 2 beschränkt ist, sondern sich ebenso über die gesamte Länge des Dübels erstrecken könnte. In diesem Fall käme eine entsprechende Anzahl an Teilschlitzen hinzu.

In dem hinteren Bereich1 weist der erfindungsgemäße Kunststoffdübel in der dargestellten Ausführungsform eine Ausnehmung 11 auf, die sich in Längsrichtung zwischen den Spreizschenkeln 7 und 8 erstreckt. Im Vergleich zu dem Schlitz 21 ist die Ausnehmung 11 breiter. Der Schlitz 21 und die Ausnehmung 22 können miteinander verbunden sein. Die Ausnehmung 11 wird in Längsrichtung L in voller Länge von einem Balken 12 überspannt. Bei einem Aufspreizen der Spreizschenkel wird die durch den Balken 12 überspannte Strecke verkürzt, so dass der Balken 12 sich bogenförmig nach außen biegt, hier also in etwa aus der Zeichnungsebene heraus, bzw. auf der gegenüberliegenden Seite in diese hinein. Bei der Verwendung von Schrauben als Befestigungsmittel wird das Biegen des Balkens 12 nach außen durch den Stegbereich 22 noch verstärkt, da die Spreizschenkel sich in dem Stegbereich 22 weniger stark spreizen und dieser sich durch das Einschrauben nach hinten zieht.

Der Balken ist im Bereich einer vorderen Anbindung 13 und gegebenenfalls auch im Bereich einer hinteren Anbindung 14 vorzugsweise einstückig mit einem oder beiden der Spreizschenkel verbunden, hier mit Spreizschenkel 8. Eine mittlere Anbindung 15 kann den Balken 12 zusätzlich mit einem oder beiden der Spreizschenkel verbinden, hier mit Spreizschenkel 7. Dadurch bildet der Balken 12 vorteilhaft einen zweifachen Bogen aus, wenn die Spreizschenkel 7 und 8 gespreizt werden.

### Bezugszeichen

- 1: Hinterer Bereich
- 2: Vorderer Bereich
- 10: Rippen
- 11: Ausnehmung
- 12: Balken
- 13: Anbindung vom
- 14: Anbindung hinten
- 15: Anbindung mittig
- 21: Schlitz
- 21a: Erster Teilschlitz
- 21b: Zweiter Teilschlitz
- 22: Stegbereich
- 3: Dübelhülse
- 4: Vorsprünge
- 5: Vertiefungen
- 6: Dübelspitze
- 7,8: Spreizschenkel
- 9: Bohrung
- L: Längsrichtung

## Patentansprüche

1. Kunststoffdübel mit zwei Spreizschenkeln (7, 8), die durch einen Schlitz (21) zwischen den Spreizschenkeln getrennt sind, wobei der Schlitz in zumindest einem Stegbereich (22) unterbrochen ist, wobei der Schlitz (21) einen ersten Teilschlitz (21a) und einen zweiten Teilschlitz (21b) aufweist, die außerhalb des Stegbereichs (22) im Wesentlichen auf einer gemeinsamen Linie in Längsrichtung (L) verlaufen, wobei der erste Teilschlitz (21a) und der zweite Teilschlitz (21b) zumindest in einem Teil des Stegbereichs (22) in Längsrichtung (L) überlappen, **dadurch gekennzeichnet, dass** die Spreizschenkel in Längsrichtung aufeinander folgende Vorsprünge (4) und Vertiefungen (5) aufweisen, wobei alle Vorsprünge (4) eine im Wesentlichen gleiche Höhe aufweisen, während die Vertiefungen (5) in Richtung der Dübelspitze (6) im Wesentlichen kontinuierlich tiefer sind.

2. Kunststoffdübel nach Anspruch 1, **dadurch gekennzeichnet, dass** der erste Teilschlitz (21a) und der zweite Teilschlitz (21b) in dem Stegbereich (22) im Wesentlichen parallel zueinander angeordnet sind.

3. Kunststoffdübel nach einem der Ansprüche 1 oder 2, **dadurch gekennzeichnet, dass** der erste Teilschlitz (21a) und der zweite Teilschlitz (21b) gegensinnig aus der Längsrichtung (L) abgeknickt sind und in dem Stegbereich (22) schräg auf dem Umfang des Dübels verlaufen.

4. Kunststoffdübel nach einem der vorhergehenden Ansprüche, **dadurch gekennzeichnet, dass** der erste Teilschlitz (21a) sich von einer Dübelspitze (6) bis zu dem Stegbereich (22) erstreckt und der zweite Teilschlitz (21b) sich von dem Stegbereich (22) bis zu einem in Längsrichtung (L) hinteren Bereich (1) der Spreizschenkel erstreckt.

5. Kunststoffdübel nach einem der vorhergehenden Ansprüche, **dadurch gekennzeichnet, dass** die Spreizschenkel (7, 8) durch eine Ausnehmung (11), die sich in Längsrichtung (L) zwischen den Spreizschenkeln erstreckt, getrennt sind, wobei die Ausnehmung (11) durch einen Balken (12) in Längsrichtung (L) überbrückt ist.

6. Kunststoffdübel nach Anspruch 5, **dadurch gekennzeichnet, dass** der Balken (12) mit dem einen Spreizschenkel (7) und/oder mit dem anderen Spreizschenkel (8) vorzugsweise einstückig im Bereich mindestens einer Anbindung (13, 14, 15) verbunden ist.

7. Kunststoffdübel nach Anspruch 6, **dadurch gekennzeichnet, dass** eine der Anbindungen (13) an einem vorderen Ende des Balkens (12) angeordnet ist und/oder eine weitere Anbindung (14) an einem hinteren Ende des Balkens (12) angeordnet ist.

8. Kunststoffdübel nach einem der Ansprüche 6 oder 7, **dadurch gekennzeichnet, dass** eine dritte Anbindung (15) zwischen dem vorderen und hinteren Ende des Balkens (12) angeordnet ist, vorzugsweise in Längsrichtung (L) mittig des Balkens.

9. Kunststoffdübel nach einem der Ansprüche 5 bis 8, **dadurch gekennzeichnet, dass** der Schlitz, (21) in einem in Längsrichtung vorderen Bereich (2) und die Ausnehmung (11) in einem in Längsrichtung hinteren Bereich (1) der Spreizschenkel (7, 8) angeordnet ist.

10. Kunststoffdübel nach einem der Ansprüche 5 bis 9, **dadurch gekennzeichnet, dass** der Schlitz (21) und die Ausnehmung (11) miteinander verbunden sind.

11. Kunststoffdübel nach einem der vorhergehenden Ansprüche, **dadurch gekennzeichnet, dass** die Spreizschenkel im hinteren Bereich (1) einstückig mit einer Dübelhülse (3) verbunden sind, welche eine Aufnahme für ein Befestigungsmittel aufweiset, wobei die Spreizschenkel in einem vorderen Bereich (2) in einer Dübelspitze (6) enden.

## Claims

1. Plastic plug having two expanding legs (7, 8) which are separated by a slot (21) between the expanding legs, wherein the slot is interrupted in at least one web region (22), wherein the slot (21) comprises a first partial slot (21a) and a second partial slot (21b) which extend substantially on a common line in the longitudinal direction (L) outside the web region (22), wherein the first partial slot (21a) and the second partial slot (21b) overlap in the longitudinal direction (L) at least in a part of the web region (22), **characterized in that** the expanding legs have successively following projections (4) and depressions (5) in the longitudinal direction, wherein all the projections (4) have a substantially identical height, whereas the depressions (5) are substantially continuously deeper in the direction of the plug tip (6).

2. Plastic plug according to Claim 1, **characterized in that** the first partial slot (21a) and the second partial slot (21b) are arranged substantially parallel to one another in the web region (22).

3. Plastic plug according to either of Claims 1 and 2, **characterized in that** the first partial slot (21a) and the second partial slot (21b) are bent off in opposite directions from the longitudinal direction (L) and extend obliquely on the periphery of the plug in the web region (22).

4. Plastic plug according to one of the preceding claims, **characterized in that** the first partial slot (21a) extends from a plug tip (6) to the web region (22) and the second partial slot (21b) extends from the web region (22) to a region (1) of the expanding legs that is situated to the rear in the longitudinal direction (L).

5. Plastic plug according to one of the preceding claims, **characterized in that** the expanding legs (7, 8) are separated by a cutout (11) which extends in the longitudinal direction (L) between the expanding legs, wherein the cutout (11) is bridged by a bar (12) in the longitudinal direction (L).

6. Plastic plug according to Claim 5, **characterized in that** the bar (12) is connected to the one expanding leg (7) and/or to the other expanding leg (8), preferably in one piece, in the region of at least one attachment (13, 14, 15).

7. Plastic plug according to Claim 6, **characterized in that** one of the attachments (13) is arranged at a front end of the bar (12) and/or a further attachment (14) is arranged at a rear end of the bar (12).

8. Plastic plug according to either of claims 6 and 7, **characterized in that** a third attachment (15) is arranged between the front and rear end of the bar (12), preferably in the centre of the bar in the longitudinal direction (L).

9. Plastic plug according to one of Claims 5 to 8, **characterized in that** the slot (21) is arranged in a region (2) situated to the front in the longitudinal direction and the cutout (11) is arranged in a region (1) of the expanding legs (7, 8) situated to the rear in the longitudinal direction.

10. Plastic plug according to one of Claims 5 to 9, **characterized in that** the slot (21) and the cutout (11) are connected to one another.

11. Plastic plug according to one of the preceding claims, **characterized in that** the expanding legs are connected in one piece in the rear region (1) to a plug sleeve (3) which has a receptacle for a fastening means, wherein the expanding legs end in a plug tip (6) in a front region (2).

## Revendications

1. Cheville en plastique comprenant deux branches d'écartement (7, 8) qui sont séparées par une fente (21) entre les branches d'écartement, la fente étant interrompue en au moins une région de nervure (22), la fente (21) présentant une première fente partielle (21a) et une deuxième fente partielle (21b), qui s'étendent dans la direction longitudinale (L) essentiellement sur une ligne commune en dehors de la région de nervure (22), la première fente partielle (21a) et la deuxième fente partielle (21b) se chevauchant au moins dans une partie de la région de nervure (22) dans la direction longitudinale (L), **caractérisée en ce que** les branches d'écartement présentent des saillies (4) et des renfoncements (5) successifs dans la direction longitudinale, toutes les saillies (4) présentant substantiellement la même hauteur, tandis que les renfoncements (5) sont sensiblement de plus en plus profonds dans la direction de la pointe de la cheville (6).

2. Cheville en plastique selon la revendication 1, **caractérisée en ce que** la première fente partielle (21a) et la deuxième fente partielle (21b) sont disposées essentiellement parallèlement l'une à l'autre dans la région de la nervure (22).

3. Cheville en plastique selon l'une quelconque des revendications 1 ou 2, **caractérisée en ce que** la première fente partielle (21a) et la deuxième fente partielle (21b) sont coudées en sens inverse par rapport à la direction longitudinale (L), et s'étendent dans la région de la nervure (22) obliquement sur la périphérie de la cheville.

4. Cheville en plastique selon l'une quelconque des revendications précédentes, **caractérisée en ce que** la première fente partielle (21a) s'étend depuis une pointe de cheville (6) jusqu'à la région de nervure (22) et la deuxième fente partielle (21b) s'étend depuis la région de nervure (22) jusqu'à une région arrière (1), dans la direction longitudinale (L), des branches d'écartement.

5. Cheville en plastique selon l'une quelconque des revendications précédentes, **caractérisée en ce que** les branches d'écartement (7, 8) sont séparées par un évidement (11) qui s'étend dans la direction longitudinale (L) entre les branches d'écartement, l'évidement (11) étant surmonté par une barrette (12) dans la direction longitudinale (L).

6. Cheville en plastique selon la revendication 5, **caractérisée en ce que** la barrette (12) est connectée à l'une des branches d'écartement (7) et/ou à l'autre branche d'écartement (8), de préférence d'une seule pièce dans la région d'au moins une liaison (13, 14, 15).

7. Cheville en plastique selon la revendication 6, **caractérisée en ce que** l'une des liaisons (13) est disposée sur une extrémité avant de la barrette (12), et/ou une autre liaison (14) est disposée à une extrémité arrière de la barrette (12).

8. Cheville en plastique selon la revendication 6 ou 7, **caractérisée en ce qu'**une troisième liaison (15) est disposée entre l'extrémité avant et l'extrémité arrière de la barrette (12), de préférence dans la direction longitudinale (L) au milieu de la barrette.

9. Cheville en plastique selon l'une quelconque des revendications 5 à 8, **caractérisée en ce que** la fente (21) est disposée dans une région avant (2) dans la direction longitudinale, et l'évidement (11) est disposé dans une région arrière (1), dans la direction longitudinale, des branches d'écartement (7, 8).

10. Cheville en plastique selon l'une quelconque des revendications 5 à 9, **caractérisée en ce que** la fente (21) et l'évidement (11) sont connectés l'un à l'autre.

11. Cheville en plastique selon l'une quelconque des revendications précédentes, **caractérisée en ce que** les branches d'écartement dans la région arrière (1) sont connectées d'une seule pièce à une douille de cheville (3), qui présente un logement pour un moyen de fixation, les branches d'écartement se terminant dans une région avant (2) par une pointe de cheville (6).
